# EUROPÄISCHE PATENTSCHRIFT

(11) **EP 1 920 268 B1**
(45) Veröffentlichungstag und Bekanntmachung des Hinweises auf die Patenterteilung: **30.12.2009**
(21) Anmeldenummer: 06777903.3
(22) Anmeldetag: 21.07.2006
(51) Int. Cl.: G01S 13/93, B60Q 1/52, G08G 1/04, B60K 31/00, B60R 21/00

(54) **VERFAHREN FÜR DIE ERFASSUNG EINES VERKEHRSRAUMS**
METHOD FOR THE DETECTION OF A TRAFFIC ZONE
PROCEDE DE DETECTION D'UN ESPACE DE CIRCULATION

(30) Priorität: 18.08.2005 DE 102005039103
(43) Veröffentlichungstag der Anmeldung: 14.05.2008
(73) Patentinhaber: ROBERT BOSCH GMBH, 70442 Stuttgart (DE)
(72) Erfinder: STAEMPFLE, Martin, 71701 Schwieberdingen (DE); BECKER, Jan-Carsten, 71701 Schwieberdingen (DE)
(86) Internationale Anmeldenummer: PCT/EP2006/064534
(87) Internationale Veröffentlichungsnummer: WO 2007/020153

(56) Entgegenhaltungen:
- EP-A- 1 413 500
- US-A1- 2003 060 969
- US-A1- 2005 096 838
- US-B1- 6 311 123

## Beschreibung

### Stand der Technik

Die Erfindung betrifft ein Verfahren für die Erfassung eines Verkehrsraums nach dem Oberbegriff des Anspruchs 1. Unter Verkehrsraum im Sinne der vorliegenden Anmeldung sind diejenigen Bereiche von Verkehrswegen und die sich darauf bewegenden Verkehrsteilnehmer zu verstehen, die von dem Fahrer eines Fahrzeugs, insbesondere unter Zuhilfenahme von optischen und elektronischen Hilfsmitteln, erfassbar sind. Derzeit werden Umfeldsensoren wie z.B. Ultraschallsensoren, Radarsensoren, Mono- oder Stereo-Videosysteme oder Laserscanner in unterschiedlichen Konfigurationen zur Erfassung des Verkehrsraums eingesetzt. Aus den jeweiligen Anforderungen der nachgeschalteten Fahrerassistenzsysteme werden geeignete Sensorkonfigurationen abgeleitet. Die Konfigurationen unterscheiden sich in Art, Anzahl und Anordnung der eingesetzten Einzelsensoren und Sensorcluster. Derzeit werden die Sensordaten hauptsächlich direkt für die Fahrfunktionen eingesetzt. So werden beim ACC (Adaptive Cruise Control) der Abstand und die Relativgeschwindigkeit zum vorausfahrenden Fahrzeug genutzt, um ihm mit konstanter Zeitlücke zu folgen. Es erfolgt keine weitere Auswertung der vorhandenen Signale. Eine umfassende Beschreibung der Fahrumgebung wird derzeit nicht vorgenommen. Die von den Sensoren gelieferten Daten werden nicht vollständig ausgewertet. Werden die Daten geeignet miteinander kombiniert, resultiert zusätzliche Information, die bei entsprechender Aufbereitung Zusatznutzen bringen kann.

Die zitierte US 6,311,123 B1 zeigt eine Vorgehensweise für die Erfassung eines Verkehrsraums mit einem fahrzeuggebundenem Sensorsystem, bei welchem Objekte erkannt werden und die Position mehrerer vorausfahrender Fahrzeuge auf der Fahrspur abgeschätzt werden. Ziel ist festzustellen, wie die Position der vorausfahrenden Fahrzeuge in der Fahrspur zum eigenen Fahrzeug ist.

### Vorteile der Erfindung

Aufgabe der Erfindung ist die Bereitstellung von Information über die Anzahl der Fahrstreifen auf der Verkehrsfläche und die Bewegungsrichtung der Fahrzeuge auf den Fahrstreifen. Darüber hinaus soll das Verfahren eine Durchschnittsgeschwindigkeit für jeden erkannten Fahrstreifen zur Verfügung stellen. Beispielsweise werden fünf Fahrstreifen erkannt; drei links des eigenen Fahrstreifens, der eigene Fahrstreifen selbst und ein Fahrstreifen rechts des eigenen Fahrstreifens. Auf den beiden am weitesten links liegenden Fahrstreifen befinden sich entgegenkommende Fahrzeuge; auf den drei am weitesten rechts liegenden Fahrstreifen (einschließlich des eigenen Fahrstreifens) befinden sich Fahrzeuge in der eigenen Fahrtrichtung. Zusätzlich wird für jeden dieser fünf Fahrstreifen eine Durchschnittsgeschwindigkeit berechnet. Die Erfindung betrifft somit ein Verfahren zur Bestimmung der Anzahl der Fahrstreifen, zur Bestimmung der Fahrtrichtungen und zur Bestimmung der durchschnittlichen Geschwindigkeiten auf den einzelnen Fahrstreifen. Weiterhin ist eine Schnittstelle vorgesehen, welche dem Fahrer die erzeugte Information über den Verkehrsfluss in geeigneter Weise anzeigt. Eine weitere Schnittstelle ist vorgesehen, welche die Information an Fahrerassistenzsysteme weiterleitet. Durch eine geeignete Anzeige kann dem Fahrer die Information über den Verkehrsfluss zur Verfügung gestellt werden. Diese Zusatzinformation kann der Fahrer bei der Planung seines Fahrkurses nutzen. Er erhält dadurch einen Zusatznutzen der verbauten Sensorik. Nachgeschaltete Fahrerassistenzsysteme können die Information über den Verkehrsfluss nutzen. Beim Spurwechsel oder bei dem Ausweichen auf einen benachbarten Fahrstreifen ist die Kenntnis der Fahrtrichtung eine wertvolle Information (z.B. für eine eventuelle Warnung). Das erfindungsgemäße Verfahren ermöglicht die Realisierung eines Fahrerassistenzsystems mit stark gesteigertem Nutzen für den Fahrer. So kann selbst auf Fahrbahnen ohne Markierungen der Verlauf von Fahrspuren erkannt werden. Falls das eigene Fahrzeug einen Spurwechsel auf eine Fahrspur vornehmen will, auf der bisher Gegenverkehr erkannt worden ist, kann eine Warnung für den Fahrer ausgegeben werden. Durch Vergleich der Durchschnittsgeschwindigkeiten auf benachbarten Fahrspuren, kann dem Fahrer eine Empfehlung für einen Wechsel der Fahrspur gegeben werden. Bei Fahrerassistenzsystemen mit Kollisionswarnung kann die Möglichkeit einer in den Gegenverkehr führenden und daher riskanten Ausweichtrajektorie unberücksichtigt bleiben. Stattdessen kann eine frühere Warnung oder eine stärkere Bremsung berücksichtigt werden. Bei Ausfall von für die Spurerkennung durch Erfassung von Fahrbahnmarkierungen vorgesehenen Sensoren kann das erfindungsgemäße Verfahren weiterhin Fahrspuren erkennen und dadurch virtuell erzeugte Fahrspurmarkierungen bereitstellen. Besonders in Baustellenbereichen sind oftmals keine oder nur sehr undeutlich erkennbare Markierungen vorhanden. Auch hier kann das erfindungsgemäße Verfahren durch Erfassung von Fahrspuren aufgrund des fließenden Verkehrs einen vollwertigen Ersatz für die Detektion von Fahrspurmarkierungen leisten.

### Zeichnung

Ausführungsbeispiele der Erfindung werden nachfolgend unter Bezug auf die Zeichnung näher erläutert. Dabei zeigen
- Figur 1: ein Blockdiagramm eines Systems für die Erfassung eines Verkehrsraums,
- Figur 2: ein Datenflussdiagramm,
- Figur 3: eine Wichtungsfunktion,
- Figur 4: einen Verkehrsraum aus der Vogelperspektive.

### Beschreibung der Ausführungsbeispiele

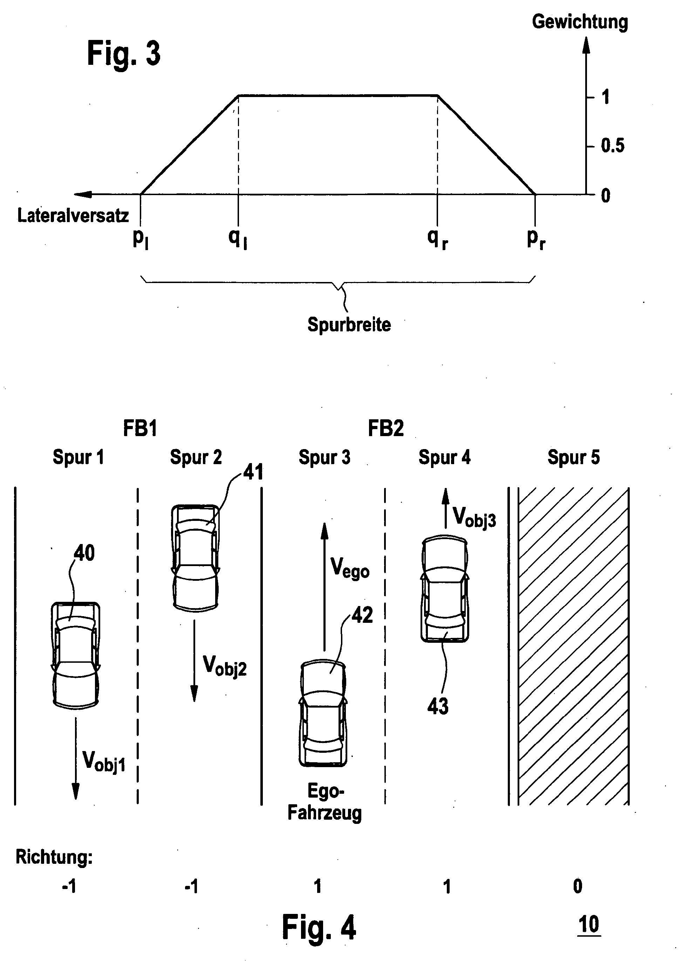

Figur 4 zeigt beispielhaft einen Verkehrsraum 10 aus der Vogelperspektive. Dargestellt sind mehrere Fahrspuren Spur 1, Spur 2, Spur 3, Spur 4 umfassende Fahrbahnen FB1 (Spur 1, Spur 2), FB2 (Spur 3, Spur 4), sowie eine vorzugsweise für den ruhenden Verkehr vorgesehene Fahrspur Spur 5. Die Fahrzeuge 42, 43 auf den Fahrspuren Spur 3 und Spur 4 bewegen sich beispielsweise in Nordrichtung. Dabei bewegt sich das eigene Fahrzeug 42 auf der Fahrspur Spur 3. Die Fahrzeuge 40, 41 auf der Fahrbahn FB1 (Spur 1, Spur 2) bewegen sich in Gegenrichtung fort. Einsatzgebiet für das erfindungsgemäße Verfahren sind bevorzugt Autobahnen, Bundes- und Landstraßen. Auch Stadtautobahnen und Zubringerstraßen zu den genannten Straßentypen sind Straßentypen, auf denen das erfindungsgemäße Verfahren vorteilhaft eingesetzt werden kann. Grundsätzlich arbeitet das Verfahren dabei mit allen fahrzeuggebundenen Umfeldsensoren, die Objekte in dem erfassbaren Verkehrsbereich detektieren können. Besonders vorteilhaft werden Radarsensoren (Fern- und Nahbereich), Videosensoren (Mono- und Stereosysteme) und Laserscanner eingesetzt. Das Verfahren arbeitet ausschließlich mit bewegten Objekten. Stehende Objekte werden in einer Eingangsstufe des das Verfahren durchführenden Systems gefiltert. Dadurch wird vorteilhaft verhindert, dass Objekte der Randbebauung in die Detektion von Fahrspuren einbezogen werden. Allerdings werden dadurch Fahrspuren mit ausschließlich ruhendem Verkehr, wie beispielsweise die in Figur 4 mit Spur 5 bezeichnete Fahrspur, nicht erkannt. Auch eine leere Autobahn, auf der sich also keine Fahrzeuge bewegen, führt mit dem erfindungsgemäßen Verfahren nicht zu einer Erkennung von Fahrspuren. Für diese vorstehend genannten Fallgestaltungen sind noch keine praxistauglichen Lösungsansätze in Sicht. Die Erfindung geht von einer Modellvorstellung zur Beschreibung der Fahrspuren aus. Parameter sind dabei insbesondere die Anzahl der Fahrspuren und die Breite der Fahrspuren. Das Modell für die Erfassung des Verkehrsflusses in dem Umfeld des Fahrzeugs geht dabei von der Hypothese aus, dass in der Regel mehrere Fahrspuren vorhanden sind, wobei eine maximale Anzahl von Fahrspuren nₘₐₓ angenommen wird. Parameter des Modells sind insbesondere
- die Breiten der einzelnen Fahrspuren mit einem diskreten, endlichen Wertebereich, wie beispielsweise Breiten zwischen 2,00m und 4,00m;
- die Fahrtrichtung der Fahrzeuge auf den erkannten Fahrspuren mit einem diskreten, binären Wertebereich, zum Beispiel [-1,1];
- die Durchschnittsgeschwindigkeit der Fahrzeuge auf den erkannten Fahrspuren mit kontinuierlichem Wertebereich, zum Beispiel das Geschwindigkeitsintervall zwischen -200 km/h und 200 km/h.

Eine wichtige Aufgabe besteht in der Bestimmung eines optimalen Parametersatzes für das Modell. Optimal ist der Parametersatz dann, wenn er die Realität bestmöglich beschreibt. Dieses Optimierungsproblem wird in jedem Zyklus, der durch neue Sensordaten getriggert wird, gelöst. Neue Sensordaten werden beispielsweise alle 100ms ermittelt. Vorteilhaft wird diese Ermittlung zweistufig ausgeführt. In einer ersten Stufe werden die optimalen Breiten der Fahrspuren bestimmt (Funktionsmodule 23, 24, 25). In einer anschließenden zweiten Stufe werden die Fahrtrichtung und die Durchschnittsgeschwindigkeit auf den jeweiligen Fahrspuren bestimmt (Funktionsmodul 26). Um zu starke Oszillationen des Ergebnisses zu vermeiden, werden alle Ausgangsgrößen vorteilhaft tiefpassgefilterl (Funktionsmodul 27). Da die Ergebnisinformation nicht führ fahrphysikalisch kritische Manöver oder zeitkritische Entscheidungen verwendet wird, ist eine Filterung mit einer eher größeren Zeitkonstante zweckmäßig. Damit werden einzelne falsche Modelle zuverlässig herausgefiltert und man erhält eine relativ stabile Fahrspurinformation. Die Modellinformation wird in einer Matrix abgelegt (Funktionsmodul 20). Die Matrix besteht aus nₘₐₓ Spalten. Für jede Fahrspur ist eine Spalte vorgesehen. Jede Zeile der Matrix enthält eine mögliche Fahrspurbreitenkombination. Ein Matrixelement beschreibt die Plausibilität, dass eine bestimmte Fahrspur eine bestimmte Breite besitzt. In jedem Zyklus wird die Matrix neu berechnet. Zu Beginn eines jeden Zyklus werden stehende Objekte herausgefiltert (Funktionsmodul 21). Stehende Fahrzeuge können nämlich nicht von einer Randbebauung unterschieden und somit nicht für eine Bestimmung der Fahrspuren herangezogen werden.

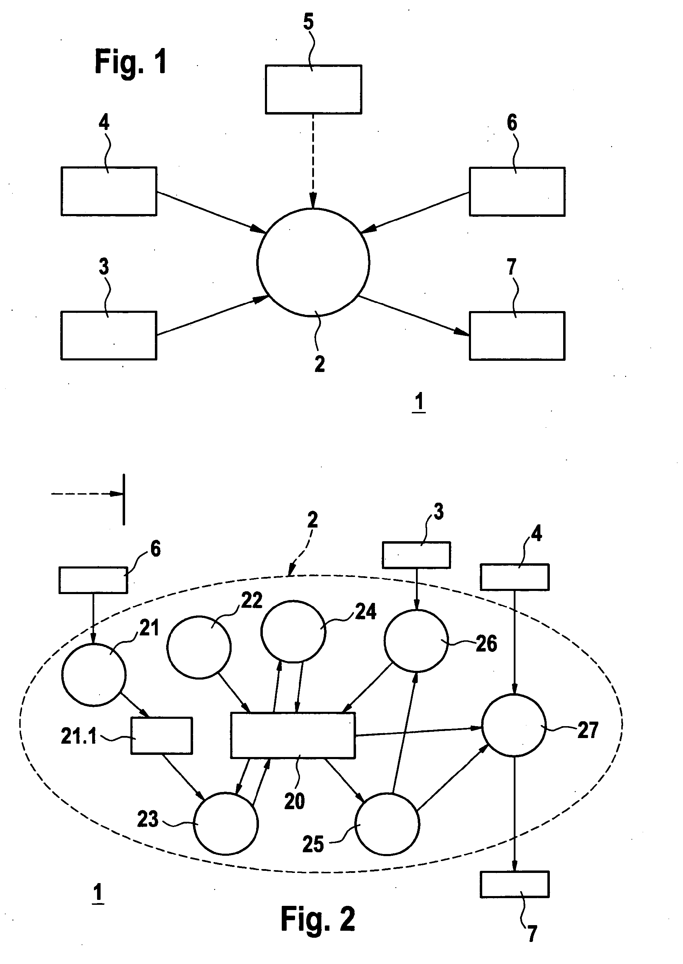

Durch die Sensoren des eigenen Fahrzeugs detektierte, sich bewegende Objekte, insbesondere also fremde Fahrzeuge 40, 41, 43 aus dem Verkehrsraum 10, werden den anhand der Modellvorstellung ermittelten Fahrspuren Spur 1, Spur 2, Spur 4 zugeordnet. Durch jede derartige Zuordnung erhöht sich die Plausibilität für die Existenz der jeweiligen Spur. Dabei ist das plausibelste Modell das aktuell gültige, das auch ausgegeben wird. Werden zusätzlich von einem für Fahrbahnmarkierungen empfindlichen Sensor solche Fahrbahnmarkierungen erkannt, fließt diese Information vorteilhaft in die Parametrierung der Fahrspurparameter gemäß Modellvorstellung ein. So kann durch die Sensorerfassung die Spurbreite der Fahrspur direkt erfasst sein und muss daher nicht als Modellparameter ermittelt werden. Das in Figur 1 dargestellte Blockdiagramm eines Systems 1 für die Erfassung eines Verkehrsraums erläutert die Einbettung des erfindungsgemäßen Verfahrens in das Gesamtsystem eines Fahrerassistenzsystems. Das erfindungsgemäße Verfahren wird auch mit dem Kurzbegriff "SIL" (Situation Interpretation Lane) bezeichnet. In dem mit Bezugsziffer 2 bezeichneten Funktionsmodul wird das erfindungsgemäße Verfahren durchgeführt. Eingangsseitig ist das Funktionsmodul 2 mit den Funktionsmodulen 3, 4, 5 und 6 verbunden. Dabei stellt das Funktionsmodul 3 Betriebskenngrößen des eigenen Fahrzeugs (Bezugsziffer 42 in Figur 4), wie beispielsweise die Geschwindigkeit, die Gierrate, den Lenkwinkel, die Querbeschleunigung, bereit. Das Funktionsmodul 4 stellt die aktuelle Zeit bereit. Das Funktionsmodul 5 enthält eine Sensordatenfusion (SDF). Das Funktionsmodul 5 synchronisiert die Sensordaten aus dem Funktionsmodul 6 und stellt dem Funktionsmodul 2 konsistente Objekte aus dem Fahrzeugumfeld zur Verfügung. Das Funktionsmodul 6 stellt Daten der von Sensoren in dem Verkehrsraum 10 detektierten Objekte bereit. Ausgangsseitig ist das Funktionsmodul 2 mit einem Funktionsmodul 7 verbunden. Das Funktionsmodul 7 stellt das Ergebnis des erfindungsgemäßen Verfahrens bereit. Anhand des in Figur 2 dargestellten Flussdiagramms werden nun im Folgenden die einzelnen Verfahrensschritte ausführlich dargestellt, die im Wesentlichen in dem Funktionsmodul 2 des Systems 1 ablaufen. Durch die in dem Funktionsmodul 2 gezeichneten Pfeile wird dabei die Reihenfolge der Abarbeitung verdeutlicht. Das Funktionsmodul 2 umfasst seinerseits weitere Funktionsmodule 20,21,22,23,24,25,26,27. Die meisten dieser Funktionsmodule, nämlich die Funktionsmodule 22,23,24,25,26,27 sind dabei mit dem Funktionsmodul 20 verbunden. Lediglich das Funktionsmodul 21 ist nicht mit dem Funktionsmodul 22, sondern mit dem Funktionsmodul 23 verbunden. Das Funktionsmodul 6 ist mit dem Funktionsmodul 21 innerhalb des Funktionsmoduls 2 verbunden. Das Funktionsmodul 3 ist mit dem Funktionsmodul 26 verbunden. Das Funktionsmodul 4 ist mit dem Funktionsmodul 27 verbunden. Das Funktionsmodul 7 ist mit dem Funktionsmodul 27 verbunden. Im Folgenden werden der funktionelle Zusammenhang der Funktionsmodule und der Ablauf der Verfahrensschritte weiter erläutert. Über das Funktionsmodul 6 werden dem Funktionsmodul 21 Daten von Objekten zugeleitet, die von Sensoren des eigenen Fahrzeugs 42 in dem von den Sensoren erfassten Verkehrsraum 10 detektiert worden sind. In dem Funktionsmodul 21 findet eine Selektion der Objektdaten statt. Dabei werden ruhende Objekte ausgesondert und nur die Daten von sich bewegenden Objekten zu einem Funktionsmodul 21.1 weitergeleitet. Dadurch werden vorteilhaft störende Daten von der Randbebauung und dergleichen ausgesondert. In dem Funktionsmodul 21.1 wird eine Liste der durch diese Selektion bereitgestellten Objekte zusammengestellt. In dieser Liste ist auch die laterale Position der erfassten Objekte in Bezug auf das eigene Fahrzeug 42 enthalten. Wie bereits erwähnt, beruht das erfindungsgemäße Verfahren auf einer Modellvorstellung des erfassten Verkehrsraums. Dabei werden in dem Funktionsmodul 22 insbesondere Spurbreiten der Fahrspuren des erfassten Verkehrsraums bereitgestellt und dem Funktionsmodul 20 zugeführt. Die bereitgestellten Werte der Spurbreiten werden über das Funktionsmodul 20 auch dem Funktionsmodul 23 zugeführt, das die modellmäßig beschriebenen Spuren gewichtet und die gewichteten Daten wiederum an das Funktionsmodul 20 zurückgibt. In dem Funktionsmodul 24 wird aufgrund der gewichteten Spurdaten die Existenz der durch die Sensoren erfassten Fahrspuren geprüft. In dem Funktionsmodul 25 wird auf Basis der gewichteten Spurdaten eine Plausibilitätsprüfung durchgeführt und das plausibelste Modell der Fahrspuren berechnet. Dieses wird dann an die Funktionsmodule 26 und 27 weitergeleitet. In dem Funktionsmodul 26, das auch mit dem Funktionsmodul 3 verbunden ist und von dort Daten des eigenen Fahrzeugs erhält, werden die Durchschnittsgeschwindigkeit der auf einer Fahrspur sich bewegenden Objekte und deren Fahrtrichtung ermittelt. Das Ergebnis wird an das Funktionsmodul 20 weitergegeben. In dem Funktionsmodul 27 werden die Daten über die berechneten Fahrspuren und die plausibelsten Modelle zusammengefasst und als Ausgangsinformation an das Funktionsmodul 7 übergeben.

Das in Figur 3 dargestellte Diagramm repräsentiert eine Gewichtungsfunktion, die vorteilhaft bei der Gewichtung der Fahrspuren in dem Funktionsmodul 23 eingesetzt wird. Dabei ist auf der x-Achse des Diagramms der Lateralversatz eines von den Sensoren erfassten Objekts (z.B. Fahrzeuge 40, 41, 43 in Figur 4) in Bezug auf das eigene Fahrzeug 42 aufgetragen. Auf der y-Achse des Diagramms ist ein Gewichtungsfaktor aufgetragen. Der Gewichtungsfaktor beschreibt die Plausibilität der Zuordnung eines erfassten Objekts zu einer bestimmten Fahrspur. Aus dem Diagramm ist abzulesen, dass erfasste Objekte mit einem Lateralversatz zwischen den Werten qᵣ und qₗ einen Gewichtungsfaktor von 1 erhalten. Erfasste Objekte mit Lateralversatz zwischen pᵣ und qᵣ, sowie pₗ und qₗ erhalten einen zwischen 0 und 1 liegenden Gewichtungsfaktor. Als Spurbreite wird dabei die Strecke zwischen Lateralversatz pᵣ und pₗ definiert. Das mit dem erfindungsgemäßen Verfahren erzielte Ergebnis wird jetzt nochmals anhand der schon erwähnten Figur 4 erläutert, die einen Verkehrsraum aus der Vogelperspektive darstellt. Das eigene Fahrzeug ist mit Bezugsziffer 42 bezeichnet. Mit ,,-1" sind durch das erfindungsgemäße Verfahren detektierte Fahrspuren bezeichnet, auf denen sich Objekte, also wie hier dargestellt, die Fahrzeuge 40, 41 in Gegenrichtung zu der Fahrtrichtung des eigenen Fahrzeugs fortbewegen. Mit "1" sind durch das erfindungsgemäße Verfahren detektierte Fahrspuren bezeichnet, auf denen sich Objekte, also hier das Fremdfahrzeug 43 und das eigene Fahrzeug 42 in die gleiche Fahrtrichtung wie das eigene Fahrzeug 42 fortbewegen. Mit "0" ist eine Fahrspur bezeichnet, die nicht detektiert worden ist. Hierbei kann es sich beispielsweise um eine leere Spur oder um eine Standspur handeln, auf der nur ruhende Objekte vorhanden sind. Das dem Verfahren zugrunde liegende Modell umfasst somit insgesamt 5 Fahrspuren, von denen 4 als existent erkannt worden sind. Die mit dem erfmdungsgemäßen Verfahren gewonnenen Informationen über den Verkehrsraum werden dem Fahrer vorteilhaft über ein geeignetes Display sichtbar gemacht. Beispielsweise können die Daten in ein Sichtfenster eines Kombünstruments oder in den Monitor eines in dem Fahrzeug schon vorhandenen Navigationssystems eingeblendet werden. Vorteilhaft kann beispielsweise die Anzahl der detektierten Fahrspuren, zweckmäßig auch in Gestalt entsprechender Symbole, dargestellt werden. Auf den Fahrspuren kann die Fahrtrichtung der Objekte vorteilhaft durch Pfeile, ähnlich wie in Figur 4, dargestellt werden. Vorteilhaft kann zusätzlich die Durchschnittsgeschwindigkeit auf den einzelnen Fahrspuren, entweder numerisch oder symbolisch durch entsprechende Länge der für die Anzeige der Fahrtrichtung verwendeten Pfeile, angegeben werden.

Das erfindungsgemäße Verfahren ermöglicht die Realisierung eines Fahrerassistenzsystems mit stark gesteigertem Nutzen für den Fahrer. So kann selbst auf Fahrbahnen ohne Markierungen der Verlauf von Fahrspuren erkannt werden. Falls das eigene Fahrzeug einen Spurwechsel auf eine Fahrspur vornehmen will, auf der bisher Gegenverkehr erkannt worden ist (beispielsweise Wechsel von Spur 3 auf Spur 2 in Figur 4), kann eine Warnung für den Fahrer ausgegeben werden. Durch Vergleich der Durchschnittsgeschwindigkeiten auf benachbarten Fahrspuren (zum Beispiel Spur 3 und Spur 4 in Figur 4), kann dem Fahrer eine Empfehlung für einen Wechsel der Fahrspur gegeben werden. Weiterhin kann vorteilhaft eine Empfehlung für einen Spurwechsel gegeben werden, wenn auf der benachbarten Fahrspur eine geringere Fahrzeugdichte festgestellt wird. Bei Fahrerassistenzsystemen mit Kollisionswarnung kann die Möglichkeit einer in den Gegenverkehr führenden und daher riskanten Ausweichtrajektorie unberücksichtigt bleiben. Stattdessen kann eine frühere Warnung oder eine stärkere Bremsung berücksichtigt werden. Bei Ausfall von für die Spurerkennung durch Erfassung von Fahrbahnmarkierungen vorgesehenen Sensoren kann das erfindungsgemäße Verfahren weiterhin Fahrspuren erkennen und dadurch virtuell erzeugte Fahrspurmarkierungen bereitstellen. Besonders in Baustellenbereichen sind oftmals keine oder nur sehr undeutlich erkennbare Markierungen vorhanden. Auch hier kann das erfindungsgemäße Verfahren durch Erfassung von Fahrspuren aufgrund des fließenden Verkehrs einen vollwertigen Ersatz für die Detektion von Fahrspurmarkierungen leisten.

## Patentansprüche

1. Verfahren für die Erfassung eines Verkehrsraums (10) mit einem fahrzeuggebundenen Sensorsystem, wobei Objekte aus dem Umfeld des eigenen Fahrzeugs (42) erfasst werden und aus von den Sensoren erfassten Betriebskenngrößen der Objekte der Verlauf von Fahrspuren abgeleitet wird, **dadurch gekennzeichnet, dass** Informationen über den Verkehrsfluss ermittelt und dem Fahrer angezeigt werden und/oder an ein Fahrerassistenzsystem weitergeleitet werden, wobei die Informationen für den Verkehrsfluss die Fahrtrichtungen in den einzelnen Fahrspuren und/oder die durchschnittlichen Geschwindigkeiten auf den einzelnen Fahrspuren umfassen.

2. Verfahren nach Anspruch 1, **dadurch gekennzeichnet, dass** als Betriebskenngrößen der Objekte insbesondere, deren Fahrtrichtung, ihre Geschwindigkeit und ihr Lateralversatz zu dem eigenen Fahrzeug (42) erfasst werden.

3. Verfahren nach einem der vorhergehenden Ansprüche, **dadurch gekennzeichnet, dass** für jede Fahrspur (Spur 1, Spur 2, Spur 3, Spur 4) eine Durchschnittsgeschwindigkeit ermittelt wird.

4. Verfahren nach einem der vorhergehenden Ansprüche, **dadurch gekennzeichnet, dass** die Fahrtrichtung des eigenen Fahrzeugs (42) mit der Fahrtrichtung von Objekten in benachbarten Fahrspuren verglichen wird und dass bei einem Spurwechsel des eigenen Fahrzeugs (42) in eine Gegenverkehr führende Fahrspur wenigstens eine Warnung generiert wird.

5. Verfahren nach einem der vorhergehenden Ansprüche, **dadurch gekennzeichnet, dass** die Geschwindigkeit des eigenen Fahrzeugs (42) mit der Durchschnittsgeschwindigkeit von in die gleiche Fahrtrichtung fahrenden Objekten in benachbarten Fahrspuren verglichen wird und dass eine Empfehlung für einen Spurwechsel in eine benachbarte Spur erfolgt, wenn dort eine höhere Durchschnittsgeschwindigkeit der Objekte festgestellt wird.

6. Verfahren nach einem der vorhergehenden Ansprüche, **dadurch gekennzeichnet, dass** die Anwahl von in die gleiche Fahrtrichtung fahrenden Objekten in benachbarten Fahrspuren festgestellt wird und dass eine Empfehlung für einen Spurwechsel in eine benachbarte Spur erfolgt, wenn dort eine geringere Anzahl von Objekten (Objektdichte) festgestellt wird.

7. Verfahren nach einem der vorhergehenden Ansprüche, **dadurch gekennzeichnet, dass** der von einem Sensor erfasste Lateralabstand eines Objekts zu dem eigenen Fahrzeug mit einem Gewichtungsfaktor belegt wird.

8. Verfahren nach einem der vorhergehenden Ansprüche, **dadurch gekennzeichnet, dass** der Gewichtungsfaktor zwischen 0 und 1 liegt, wobei der Gewichtungsfaktor 1 einem in dem Intervall zwischen qr und ql liegenden Lateralabstand und der Gewichtungsfaktor 0 den Rändern einer modellmäßig vorgegebenen Fahrspur zugeordnet werden.

9. Verfahren nach einem der vorhergehenden Ansprüche, **dadurch gekennzeichnet, dass** Fahrspurinformationen auf einer Anzeigeeinrichtung dargestellt werden.

10. Fahrerassistenzsystem für die Durchführung des Verfahrens nach einem der vorhergehenden Ansprüche, umfassend ein Funktionsmodul (4) für die Zeiterfassung, ein Funktionsmodul (3) für die Erfassung von Betriebskenngrößen des eigenen Fahrzeugs (42), ein Funktionsmodul (6) für die Erfassung von Objektdaten aus dem Verkehrsraum (10), ein Funktionsmodule (2) für eine modellbasierte Fahrspurermittlung, sowie ein Funktionsmodul (7) für die Ausgabe von Fahrspurinformationen.

## Claims

1. Method for detecting a traffic zone (10) with a vehicle-bound sensor system, wherein objects from the surroundings of the driver's own vehicle (42) are detected, and the profile of lanes is derived from operating characteristic variables of the objects which are detected by the sensors, **characterized in that** information about the traffic flow is determined and displayed to the driver and/or passed on to a driver assistance system, wherein the information for the traffic flow comprises the directions of travel in the individual lanes and/or the average speeds on the individual lanes.

2. Method according to Claim 1, **characterized in that** the operating characteristic variables of the objects which are detected are, in particular, their direction of travel, their speed and their lateral offset with respect to the driver's own vehicle (42).

3. Method according to one of the preceding claims, **characterized in that** an average speed is determined for each lane (lane 1, lane 2, lane 3, lane 4).

4. Method according to one of the preceding claims, **characterized in that** the direction of travel of the driver's own vehicle (42) is compared with the direction of travel of objects in adjacent lanes, and **in that** where there is a change of lane of the driver's own vehicle (42) into a lane carrying on-coming traffic, at least one warning is generated.

5. Method according to one of the preceding claims, **characterized in that** the speed of the driver's own vehicle (42) is compared with the average speed of objects travelling in the same direction of travel in adjacent lanes, and **in that** a recommendation of a lane change into an adjacent lane is issued if a higher average speed of the objects is detected there.

6. Method according to one of the preceding claims, **characterized in that** the number of objects travelling in the same direction of travel in adjacent lanes is detected, and **in that** a recommendation of a lane change into an adjacent lane is issued if a smaller number of objects (object density) is detected there.

7. Method according to one of the preceding claims, **characterized in that** the lateral distance, detected by a sensor, of an object from the driver's own vehicle is assigned a weighting factor.

8. Method according to one of the preceding claims, **characterized in that** the weighting factor is between 0 and 1, wherein the weighting factor 1 is assigned to a lateral distance which is in the interval between qr and ql, and the weighting factor 0 is assigned to the edges of a lane which is predefined according to a model.

9. Method according to one of the preceding claims, **characterized in that** lane information is displayed on a display device.

10. Driver assistance system for carrying out the method according to one of the preceding claims, comprising a function module (4) for timing, a function module (3) for detecting operating characteristic variables of the driver's own vehicle (42), a function module (6) for detecting object data from the traffic zone (10), a function module (2) for a model-based determination of a lane, and a function module (7) for outputting lane information.

## Revendications

1. Procédé de détection d'un espace de circulation (10) à l'aide d'un système de détecteurs lié à un véhicule, des objets de l'environnement du véhicule propre (42) étant détectés et l'évolution des bandes de circulation étant dérivée de grandeurs caractéristiques de fonctionnement des objets détectés par les détecteurs,
**caractérisé en ce que**
des informations sur l'écoulement du trafic sont déterminées et présentées au conducteur et/ou sont transmises à un système d'assistance au conducteur, les informations sur l'écoulement du trafic comprenant les sens de déplacement sur les différentes bandes de circulation et/ou les vitesses moyennes sur les différentes bandes de circulation.

2. Procédé selon la revendication 1, **caractérisé en ce que** les grandeurs caractéristiques de fonctionnement des objets détectées sont en particulier leur sens de déplacement, leur vitesse et leur décalage latéral par rapport au véhicule propre (42).

3. Procédé selon l'une des revendications précédentes, **caractérisé en ce qu'**une vitesse moyenne est déterminée pour chaque bande de circulation, (bande de circulation 1, bande de circulation 2, bande de circulation 3, bande de circulation 4).

4. Procédé selon l'une des revendications précédentes, **caractérisé en ce que** le sens de déplacement du véhicule propre (42) est comparé au sens de déplacement d'objets présents sur les bandes de circulation voisines et **en ce qu'**un avertissement est délivré au cas où le véhicule propre (42) passe d'une bande de circulation à une bande de circulation dans laquelle la circulation se fait en sens inverse.

5. Procédé selon l'une des revendications précédentes, **caractérisé en ce que** la vitesse du véhicule propre (42) est comparée à la vitesse moyenne des objets qui se déplacent dans le même sens de circulation sur les bandes de circulation voisines et **en ce qu'**une recommandation de changement de bande de circulation vers une bande de circulation voisine a lieu s'il est constaté que les objets s'y déplacent à une vitesse moyenne plus élevée.

6. Procédé selon l'une des revendications précédentes, **caractérisé en ce que** le nombre d'objets qui se déplacent dans le même sens de circulation dans les bandes de circulation voisine est déterminé et **en ce qu'**une recommandation de changement de bande de circulation vers une bande de circulation voisine a lieu s'il est constaté que le nombre des objets (la densité d'objets) qui s'y trouvent est moindre.

7. Procédé selon l'une des revendications précédentes, **caractérisé en ce qu'**un facteur de pondération est appliqué à la distance latérale, détectée par un détecteur, entre un objet et le véhicule propre.

8. Procédé selon l'une des revendications précédentes, **caractérisé en ce que** le facteur de pondération est situé entre 0 et 1, le facteur de pondération de 1 étant attribué à une distance latérale située dans l'intervalle qui s'étend de qr à ql et le facteur de pondération 0 étant attribué aux bords d'une bande de circulation prédéterminée par un modèle.

9. Procédé selon l'une des revendications précédentes, **caractérisé en ce que** les informations sur les bandes de circulation sont présentées sur un dispositif d'affichage.

10. Système d'assistance au conducteur en vue de l'exécution du procédé selon l'une des revendications précédentes, comprenant un module fonctionnel (4) de détermination du temps, un module fonctionnel (3) de détection de grandeurs caractéristiques de fonctionnement du véhicule propre (42), un module fonctionnel (6) de détection de données d'objet dans l'espace de circulation (10), un module fonctionnel (2) de détermination des bandes de circulation sur base d'un modèle ainsi qu'un module fonctionnel (7) qui délivre les informations à propos des bandes de circulation.
